# EUROPEAN PATENT APPLICATION

(11) **EP 0 843 177 A1**
(43) Date of publication of application: **20.05.1998**
(21) Application number: 97830583.7
(22) Date of filing: 10.11.1997
(51) Int. Cl.: G01P 1/10, G01P 1/04

(54) **Device for measuring the speed of a means of locomotion and signal it to the driver as a function of a comparison with a pre-set reference value**

(30) Priority: 12.11.1996 IT BO960577
(71) Applicant: Eletec Elettronica e Tecnologia di Spadaro Nuccio, 47893 Borgo Maggiore (SM)
(72) Inventor: Spadaro, Nuccio, 47822 Santarcangelo di Romagna (RN) (IT); Valli, Antonio, 47824 Poggio Berni (RN) (IT)
(74) Representative: Lanzoni, Luciano

(57) **Abstract**

A device for measuring the speed of a means of locomotion and indicate it to the driver as a function of a comparison with an easily pre-set reference value comprises: transducer means (2, 3, 4, 6) to measure the speed of the means of locomotion and transform it into a corresponding electrical signal; programming means (12) to program a reference value for at least a first speed threshold; memory means (14) to store the reference value of the speed threshold; signalling means (16, 17, 31, 32); and control means (19) interacting with the transducer means (2, 3, 4, 6) programming means (12), memory means (14) and signalling means (16, 17, 31, 32) in such a way as to receive the electrical signal, compare it with the reference value of the programmed speed threshold and activate the signalling means (16, 17, 31, 32) and, when required, temporarily arrest the engine of the means of locomotion, until the speed has reached a value lower than the threshold value.

## Description

The present invention relates to a device to measure the speed of a means of locomotion, in particular a car, and signal it to the driver as a function of a comparison with a pre-set reference value.

As is well known, road traffic is regulated on most roads by maximum speed limits, and exceeding them may jeopardise one's own safety and that of others.

As a result of the growing quantity of vehicles circulating, such limits are present practically on all roads and drivers are discouraged from exceeding them by the existence of non negligible pecuniary sanctions.

However, improvements in the comfort level and in the mechanical performance of modern automobiles make it extremely easy to exceed, albeit involuntarily, the speed limits, to that the only instrumentation for monitoring current speed, represented as is known by the tachometer alone, does not allow the driver concentrated on controlling the vehicle to monitor the speed of his or her vehicle continuously. The instrumentation in use implies continual shifting of the driver's attention from driving to observing the tachometer and vice versa, and does not therefore preclude the possibility of exceeding said limits, however temporarily and involontarily, due to an excessive effort required by the act of driving, or even out of pure and simple lack of concentration.

In addition, reference is made to those dangerous situations brought about by the youth of the drivers (who often have only recently been issued their licence) at the wheel of high performance, fast automobiles in the course of leisure displacements.

Indeed, it is often the leisure context which leads to extremely grave consequences such as those which the media have labelled as "Saturday Night Slaughters".

Generally, it is parents themselves who purchase or lend the vehicle to their children but unfortunately they have no instrument available to ensure that proper use is made of it.

The purpose of the present invention therefore is to remedy the drawbacks just mentioned, providing a device able to measure the current speed of a means of locomotion and to signal it to the driver as a function of a comparison thereof performed with at least one reference value set previously. Moreover, when required, the device acts on the engine for the purpose of limiting the speed of the vehicle when it exceeds the pre-set threshold value.

According to the invention such purpose is attained by means of a device comprising transducer means to measure the speed of the means of locomotion and transform it into a corresponding electrical signal; programming means to program a reference value for at least a first speed threshold; memory means to store the reference value of said one or each speed threshold; signalling means; and control means interacting with the transducer means, the programming means, the memory means and the signalling means in such a way as to receive said electrical signal proportional to the speed of the means of locomotion, comparing it with the reference value of the programmed speed threshold and send a corresponding activation command to the signalling means .

The technical characteristics of the invention, according to the aforesaid purposes, can be clearly seen from the content of the claims reported below and its advantages shall be made more evident in the detailed description that follows, made with reference to the enclosed drawings, which represent an embodiment provided purely by way of non-limiting example, in which:
- Figure 1 is a schematic function block view of a device according to the invention;
- Figure 2 is an overall prospective view of particular speed transducing means with which the device is fitted; -
- Figures 3 and 3a are respectively a side view and an axial section, according to line III-III, of a particular means as per those in Figure 2 shown in an enlarged scale;
- Figures 4a, 4b are respectively a front view and a side view, partially sectioned, of a detail which equips the transducing means;
- Figure 4c is partially sectioned side view of a variant embodiment of the detail as per Figures 4a and 4b;
- Figure 5 is a view of a detail of the transducing means sectioned according to its own symmetry plane.

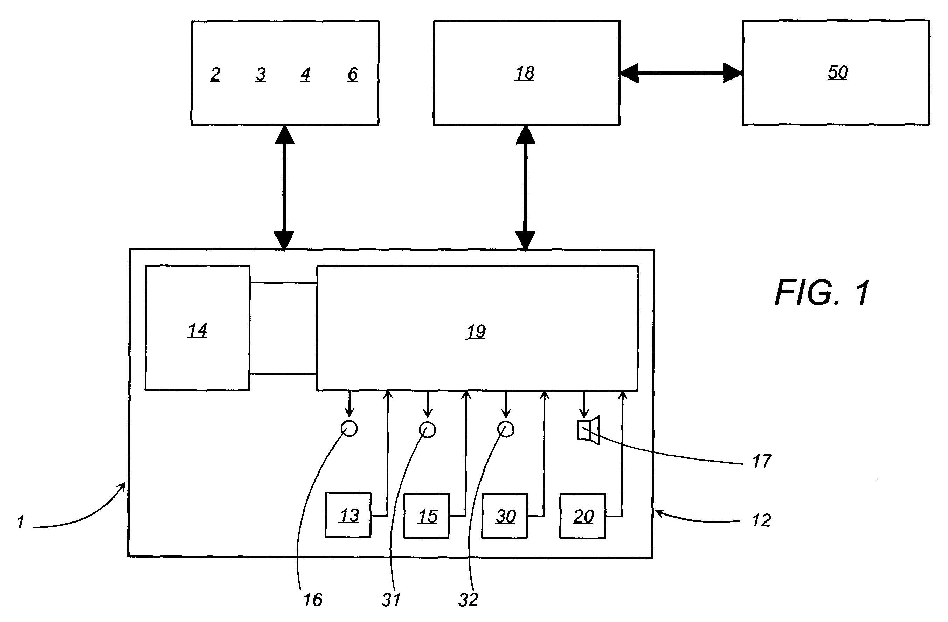

In accordance with Figure 1 of the enclosed drawings, the designation number I indicates in its entirety a device comprising transducer means 2, 3, 4, 6, programming means 12, memory means 14, signalling means 16, 17, 31, 32 and control means 19 which interface with each other to interact functionally to measure the speed of a means of locomotion, in particular for road use such as an automobile, a motorcycle or a lorry, and to signal it to the driver as a function of a comparison with a pre-set reference value.

The control means 19 are realised preferably, but not exclusively, by a microprocessor electronic circuitry located within the passenger compartment of the motor vehicle, wired on a card and fitted with a memory device, realised in the same technology, which actuates the aforesaid memory means 14.

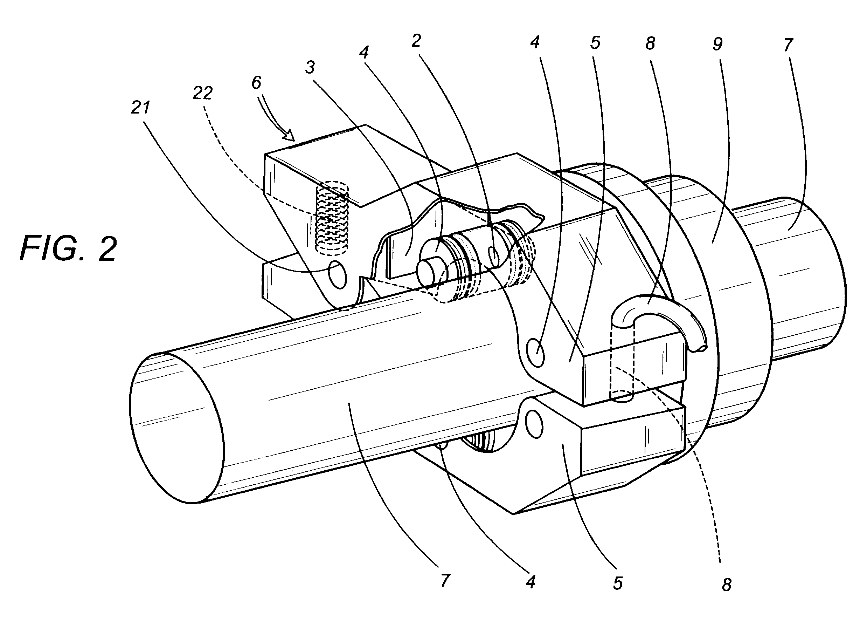

The transducer means are provided to measure the speed of the means of locomotion and transform it into a proportional electrical signal and they comprise (Figure 2) a yoke 6, fitted with a sensor 2 and an electrical circuit 3, which is tightened onto a driven shaft 7 of the vehicle, for instance represented in the case of an automobile by one of the axle shafts.

The yoke 6 has two jaws 5 mutually articulated on a pin 21 and shaped in such a way as to present in mutual combination an encompassing profile able peripherally to enclose and to grip the shaft 7 against the elastic reaction imparted by a spring 22.

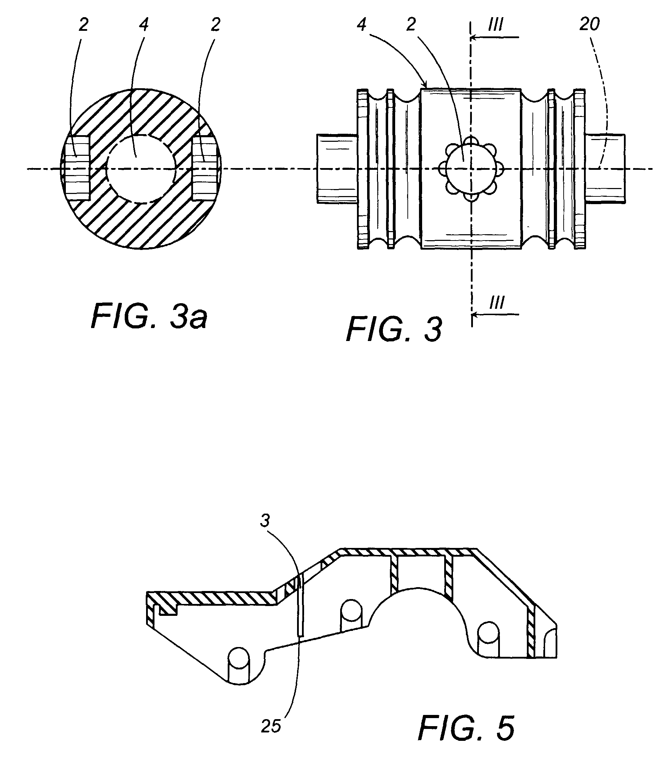

On the jaws 5 (Figures 2, 3 and 3a) are mounted three cylindrical bodies 4 free to swivel around their own axis 20, which are borne at angles 120° out of phase from each other, according to the diameter of the shaft 7.

The sensor 2 comprises at least one permanent magnet which is borne in diametrical crossing by one of the three swivelling bodies 4 (Figure 3a) in such a way as to expose their opposite magnetic polarities on areas diametrically opposed of the side surface thereof. The electrical circuit 3 comprises a conducting platelet through which flows an electrical current of suitable intensity borne in stationary fashion by the yoke 6 and which is inserted in opposed grooves 25 (Figure 5) located in the yoke 6 in such a way as to place the circuit 3 in a position and in a condition of orientation wherein it is sensitive to the magnetic flux of the permanent magnet 2.

When the yoke 6 is tightened onto the shaft 7, the freely rotating bodies 4 are driven to rotate by the motion of the shaft 7. The magnetic flux variations, perceived by the electrical circuit 3 as a consequence of the rotation of the rotating body 4 which supports the sensor 5, thus bring about pulse variations of an electrical signal outgoing from said circuit 3 which are proportional to the velocity of rotation of the shaft 7, which is therefore correlated to the speed of translation of the means of locomotion. More in particular, the electrical circuit 3 is provided with a sensitive element which perceives the flux variations of the permanent magnet and converts them into an outgoing digitised electrical signal.

The electrical signal thus generated is sent to the control means 19 which process it, reconstructing in real time the current value of the speed of the motor vehicle.

The freely rotating bodies 4 are maintained constantly in contact with the peripheral surface of the shaft 7. In the initial transient, during which the means of locomotion starts moving from a motionless state, the conditions of static friction suited to allow the yoke 6 to rotate integrally with the shaft 7 could take hold. To prevent such a possibility, therefore, reaction means are provided which comprise a wire 8 anchoring the yoke 6 to the chassis of the means of locomotion.

The yoke 6 is prevented from sliding along the shaft by constraining means comprising two tubular elements 8 splined onto the shaft 7 on each side of the yoke 6, whereof one can be seen in Figure 2.

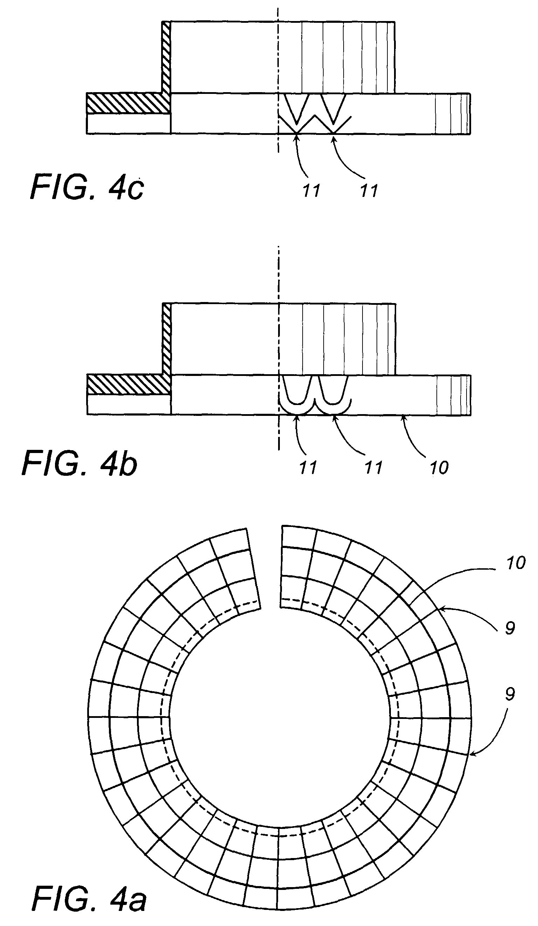

From Figures 4a, 4b and 4c, it can be noted in particular that each of the tubular elements 9 presents a rough face 10 placed adjacent to the yoke 6. The surface of the face 10 is shaped in such a way as to present areas of possible contact with the yoke 6 with linear or point development, or in any case of reduced surface extension in order to minimise sliding friction in the hypothesis that the yoke 6, stationary, should come in contact with the tubular elements 9 which rotate integrally with the shaft 7.

The tubular elements 9 can be advantageously made of plastic material of the type with reduced sliding friction coefficient; moreover, they can be constructed in two halves easily associated to the contour of the shaft 7 whereto they can be joined by means of conventional tightening bands, not shown.

If the rough face 10 were constructed in such a way as to present concentric annular projections 11, protruding towards the yoke 6, like those shown in Figures 4a, 4b and 4c and the tubular elements 9 were made of plastic material, the tubular element 9 could easily be adapted to the different diameters of the axle shafts 7 currently on the market, simply through the removal of one or more annular projections 11, starting from the centre of the tubular element 9. In an alternative embodiment, the projections 11 can present a radial profile, as shown in Figures 4b and 4c.

The easy removal, even by means of a simple manual cutter, allows the production of a model of tubular element 9 of standard size which can be adapted extremely easily, at low cost, to the different diameters of all motor vehicle axle shafts currently on the market.

In regard to the programming means, Figure 1 shows that they comprise a keyboard 12 with four keys 13, 15, 30, 20 whose pressure allows to activate specific functionality of the control means 19.

The first and the second keys 13, 15 are provided for the storage of two different reference values of the threshold speed which the driver can set, at will, as shall be made clearer farther on in the description. The third and the fourth key 30, 20 are provided respectively to set a third speed threshold which can differ functionally from the previous one as it is subordinated to a security password against unauthorised manipulation of the activation status of the limiting means 18.

Associated to the first three keys 13, 15, 30 are provided light emitting diodes (LEDs) 16, 31, 32, which in combination with a sound emitter 17 (buzzer) define more general signalling means, which are interfaced with the control means 19 in such a way that the latter can vary their state of emission as a function of whether the reference values of the pre-set threshold speed have been exceeded or not.

The device 1 also comprises means 18 for limiting the speed of the means of locomotion interfaced with the control means 19 and with the engine 50 propelling the means of locomotion in such a way as to cause the automatic shut-off of the propulsion engine 50 after a given time interval has elapsed from the moment the threshold speed set with the key 30 was exceeded. The activation and de-activation ofthe limiting means 18 can also be subordinated to the insertion in the control means of an electronic key represented by a password. This is defined upon installation of the device I and it can be entered by means of a pre-set, secret sequence of pressures to the keys 13, 15, 30 while keeping the key 20 continuously pressed. The code is entered with the same procedures utilised in the course of normal use and are described farther on.

When the limiting means 18 are not enabled, the three speed thresholds behave in the same way and it is possible to exclude, or not exclude, the sound signal of the crossing with a brief pressure of the associated key. Thus, for each threshold, with a brief pressure of the key, the sound signal is enabled if it was disabled and vice versa. When the limiting means 18 are enabled, the sound emissions associated with the third threshold (key 30) cannot be excluded.

Reactivation ofthe propulsion engine 50, after shut-off, is performed automatically by the limiting means 18 as soon as the speed of the means of locomotion reaches a value lower than that of the speed threshold.

The limiting means, in a preferable embodiment, can be actuated by means of a normally closed relay switch commanded by the control means 19 and inserted in the electrical circuit commanding the valve which controls the supply of the fuel oil sent to the propulsion engine 50, in the case of a diesel engine.

If instead the propulsion engine 50 is gasoline-fuelled, the switch can be inserted in the electrical circuit which powers the devices for the ignition of the air-fuel mixture.

In use, the device 1 allows, by means of the keyboard 12, to set a first threshold value, upon exceeding which the control means 19 activate the signalling means to cause the related LED 16 to light up, and the buzzer 17 to sound off. The sound of the latter can be conveniently differentiated in tone and/or intensity in accordance with the direction of crossing of the set threshold. After a brief period of use, recognition - by the driver - of the current speed of the means of locomotion, in reference to the set threshold, is therefore automatic and immediate and does not require observation of the LED 16.

The threshold value can be set by means of direct calibration. After taking the means of locomotion to the desired speed for the reference threshold, keeping pressed for about one second the key 13 to which the threshold is to be associated, the memory means 14 are predisposed to accept the current value of the speed of the vehicle as a reference value.

A sound signal emitted after a brief time interval notifies the driver that the value has been stored.

In a wholly similar way, it is possible to set an additional threshold value acting on the second key 15.

When the intervention ofthe limiting means 18 is not required, the key 30 is managed in a similar way to the previous ones and thus constitutes a third comparison threshold, with no distinctive peculiarity with respect to the other two.

When instead the intervention ofthe limiting means 18 is required, the threshold value stored with the use of the key 30 becomes non modifiable and it is the maximum speed allowed for the motor vehicle.

The limiting means 18 are enabled and disabled through the insertion of the electronic key, keeping the key 20 pressed and, after a time of about one second, indicated by a short sound, pressing the programmed and correct sequence on the keys 13, 15, 30.

Every time the code is typed correctly, the current state of the limiting means 18 is switched, in the sense that the limiting means 18 are enabled if they are not so enabled, and are disabled otherwise. Conveniently, this allows to set a maximum speed value, which cannot be exceeded, ofthe means of locomotion, value which cannot be modified without knowledge of the password.

When the device 1 has been programmed to enable to intervention of the limiting means 18, exceeding the threshold speed is allowed for a short time interval to allow the driver to attain safety conditions before the limiting means 18 shut off the propulsion engine 50. During such interval a light (LED 32) and acoustic indication alerts the driver. Remaining at a speed higher than the threshold value for a time longer than that allowed causes the engine 50 to shut off and the vehicle to slow down as a consequence, until the means of locomotion reaches a current speed lower than the third threshold, whereat the engine 50 is then automatically started again.

The enabled condition of the limiting means 18 is signalled to the driver by the flashing of the LED 32 associated to the third key 30. From the description above it is thus understood that the invention is characterised in that it allows for generalised employment, not being limited to a particular category of means of locomotion (automobile, motorcycle, lorry etc.) or to a particular model of such means of locomotion.

The invention thus conceived can be subject to numerous modifications and variations, without thereby departing from the scope of the inventive concept. Moreover, all components may be replaced by technically equivalent elements.

One possible variation of the invention is provided in order to control the acceleration of the means of locomotion as well.

When the limiting means 18 are not enabled, acceleration control produces no effects. When, on the other hand, the limiting means 18 are enabled, through the previously described electronic key, control over acceleration is accomplished by correlating the maximum value thereof with the maximum value of the speed of the vehicle. In particular, the acceleration value allowed is the one that would take the motionless vehicle to the maximum allowed speed within a pre-set time, for instance 16 seconds.

If the maximum allowed acceleration is exceeded, there are effects only if the current speed of the vehicle is higher than half the maximum allowed speed. In this way the driver is allowed the freedom to drive as long as the speed of the vehicle is sufficiently low.

Every time the speed of the vehicle exceeds half the maximum allowed speed and the maximum allowed acceleration is also exceeded, a continuous sound lasting about two seconds is emitted. The first time this occurs, the control device automatically decreases by a certain percentage (preferably equal to 12.5%) the value of the maximum allowed speed (third threshold) and stores the new value in the memory means 14.

The second and third time this condition is repeated, the maximum allowed speed is reduced each time by 12.5% of the value previously present in the memory.

The fourth time, and subsequent ones, no longer produce additional reductions to the maximum speed, but only cause the continuous sound signal lasting about two seconds.

In this way there is a deterrent against imprudent and dangerous driving. Moreover, by observing the value of maximum speed allowed after the means of locomotion has been used, a person other than the one who used the means of locomotion is able to verify, a posteriori, what kind of driving conduct was held by the driver of the vehicle.

To reset conditions, it is sufficient to act on the electronic key disabling limiting means 18, setting the third maximum speed threshold again and re-enabling the limiting means 18.

## Claims

1. Device for measuring the speed of a means of locomotion and signal it to the driver as a function of a comparison with a pre-set reference value, characterised in that it comprises
- transducer means (2, 3, 4, 6) to measure the speed of the means of locomotion and transform it into a corresponding electrical signal;
- programming means (12) to program a reference value for at least a first speed threshold;
- memory means (14) to store the reference value of said one or each speed threshold;
- signalling means (16, 17); and
- control means (19) interacting with said transducer means (2, 3, 4, 6), programming means (12), memory means (14) and signalling means (16, 17) in such a way as to receive said electrical signal proportional to the speed of the means of locomotion, comparing it with the reference value of the programmed speed threshold and to send a corresponding activation command to the signalling means (16, 17).

2. Device, according to claim 1, characterised in that the transducer means comprise at least one sensor (2) associated to a shaft (7) rotating with a motion correlated with the speed of the means of locomotion, and an electrical circuit (3) interacting with the sensor (2) in such a way as to provide at its output said electrical signal proportional to the speed of the means of locomotion.

3. Device, according to claim 2, characterised in that it comprises at least one freely rotating body (4) which is driven to rotate by said shaft (7) and supports said sensor (2) which is actuated by at least one permanent magnet, the electrical circuit (3) being borne in stationary fashion with respect to the shaft (7) in a condition where it is sensitive to the magnetic flux of the sensor (2), the electrical signal outgoing from said electrical circuit (3) being variable as a function of the magnetic flux variations perceived by the circuit (3) as a consequence of the rotation of the rotating body (4).

4. Device, according to claim 3, characterised in that it comprises three said rotating bodies (4), at least one thereof bears said sensor (2), which are mounted on jaws (5) of a yoke (6) which is tightened on the shaft (7) and which houses said electrical circuit (3).

5. Device, according to claim 4, characterised in that it comprises reaction means (8) to prevent the yoke (6) to be driven to rotate integrally with the shaft (7).

6. Device, according to claim 5, characterised in that said reaction means comprise a wire (8) anchoring the yoke (6) to the chassis of the means of locomotion.

7. Device, according to claim 4, characterised in that it comprises means to constrain the displacement of the yoke (6) along the shaft (7).

8. Device, according to claim 7, characterised in that said constraint means comprise at least one tubular element (9) which can be associated to the shaft (7) laterally to the yoke (6).

9. Device, according to claim 8, characterised in that said tubular element (9) presents a face (10) adjacent to the yoke (6), whose surface is rough in order to reduce its contact with the yoke (6).

10. Device, according to claim 9, characterised in that said rough face (10) presents concentric projections (11), protruding toward the yoke (6).

11. Device, according to claim 9, characterised in that said rough face (10) presents radial projections (11), protruding toward the yoke (6).

12. Device, according to claim 1, characterised in that said programming means comprise a keyboard (12) having at least a first key (13) whose pressure pre-sets the memory means (14) to store the current value of the speed of the means of locomotion, and whose subsequent release, after a set time interval, causes the acquisition in the memory of said current value as reference value for a first threshold speed.

13. Device, according to claim 12, characterised in that said keyboard (12) comprises two said keys (13, 15) for the storage of corresponding distinct values of the threshold speed.

14. Device, according to claim 1, characterised in that the signalling means comprise at least one light emitter (16) whose emission state is varied according to whether the reference value of the threshold speed is exceeded.

15. Device, according to claim 1, characterised in that the signalling means comprise a sound emitter (17) whose emission state is varied according to whether the reference value of the threshold speed is exceeded.

16. Device, according to claim 1, characterised in that it further comprises means (18) for limiting the speed of the means of locomotion interfaced with the control means (19) and with the propulsion engine (50) of the means of locomotion in such a way as to determine the automatic shut off of the propulsion engine 50 after a certain time interval has elapsed from the moment the threshold speed was exceeded, said limiting means (18) automatically command the engine 50 to start after the vehicle reaches a speed lower than the threshold speed.

17. Device, according to claim 16, characterised in that said limiting means are actuated by a normally closed switch inserted on the electrical circuit activating the propulsion engine 50 of the means of locomotion, switch which can be made to open or close upon activation of a relay commanded by the control means (19).

18. Device, according to claim 16, characterised in that said limiting means are actuated by a normally closed switch inserted on the electrical circuit commanding the fuel supply valve of the propulsion engine 50 of the means of locomotion, switch which can be made to open or close upon activation of a relay commanded by the control means (19).

19. Device, according to claim 16, characterised in that said programming means comprise a key (30) for programming a reference value for the threshold speed, exceeding which causes the intervention of said limiting means (18).

20. Device, according to claim 17, characterised in that the switch of the activation or de-activation state of said limiting means (18) is subordinated to the insertion into said control means (19) of a coded password.

21. Transducer of the rotating speed of a shaft characterised in that it is constructed according to one of the previous claims from 2 through 10.
